# EUROPÄISCHE PATENTSCHRIFT

(11) **EP 2 801 465 B1**
(45) Veröffentlichungstag und Bekanntmachung des Hinweises auf die Patenterteilung: **04.01.2017**
(21) Anmeldenummer: 14000797.2
(22) Anmeldetag: 06.03.2014
(51) Int. Cl.: B29C 45/14, B65D 1/02, B65D 83/00, B29L 31/00, B29C 45/26, B29C 45/16

(54) **Verfahren zur Herstellung eines Behälters mit einem flexiblen Innenbeutel**
Method for producing a container with a flexible inner bag
Procédé de fabrication d'un récipient contenant une poche intérieure flexible

(30) Priorität: 10.05.2013 DE 102013008088
(43) Veröffentlichungstag der Anmeldung: 12.11.2014
(73) Patentinhaber: Gaplast GmbH, 82442 Altenau (DE)
(72) Erfinder: Kneer, Roland, 82790 Farchant (DE); Kneer, Stephan, 82790 Farchant (DE)
(74) Vertreter: Flosdorff, Jürgen

(56) Entgegenhaltungen:
- EP-A1- 1 167 223
- EP-A1- 1 180 424
- EP-A1- 1 593 605
- DE-A1-102005 017 599
- US-A- 5 405 056

## Beschreibung

Verfahren zur Herstellung eines Behälters mit einem flexiblen Innenbeutel

Die Erfindung betrifft ein Verfahren zur Herstellung eines Behälters mit einem flexiblen Innenbeutel.

Der Behälter hat ein bodenloses, offenes Ende, in das ein Kolben eingreift, der vorgeschoben wird, um Behälterinhalt aus dem flexiblen Innenbeutel auszudrücken. Der Behälter bildet mit seinem Innenbeutel eine Kartusche einer Spritze.

Ein Herstellungsverfahren für einen Behälter mit einem darin angeordneten flexiblen Innenbeutel ist aus der EP 0 532 873 B1 bekannt. Bei diesem Verfahren wird ein aus zwei Schichten bestehender schlauchförmiger Vorformling extrudiert, wobei die beiden Schichten aus thermoplastischen Kunststoffen bestehen, die keine Verbindung miteinander eingehen. Der Vorformling wird in einer Blasform aufgeblasen, die den Vorformling am Boden abquetscht, wodurch die Bodennaht des Innenbeutels in der gleichzeitig entstehenden Bodennaht des Behälters eingeklemmt wird.

EP 1 180 424 A1, EP 1 593 605 A1 und EP 1 167 223 A1 offenbaren Quetschbehälter, die im Blasverfahren aus einem aus zwei Schichten bestehenden Vorformling hergestellt sind, wobei der Kunststoff des Innenbeutels keine Verbindung mit dem Kunststoff des Außenbehälters eingeht. Die Innenbeutel sind jeweils am Boden des Außenbehälters befestigt, und Druckausgleichsöffnungen in dem Außenbehälter ermöglichen den notwendigen Druckausgleich nach Abgabe von Behälterinhalt.

Die DE 10 2005 017 599 A1 offenbart ein Verfahren zur Herstellung einer Spritzenkartusche, deren Inhalt durch den Vorschub eines Spritzenkolbens ausbringbar ist. Die Kartusche dient zum getrennten Aufbewahren und zum gemeinsamen Auspressen von mindestens zwei Komponenten einer fließfähigen Masse, die in voneinander getrennten Kammern im Zylinder aufbewahrt werden.

Der vorliegenden Erfindung liegt die Aufgabe zugrunde, ein Verfahren zur Herstellung eine Spritzenkartusche mit einem flexiblen Innenbeutel anzugeben, bei der das aufwendige Koextrusionsverfahren und eine sichtbare Naht am Boden des Behälters vermieden sind.

Diese Aufgabe wird erfindungsgemäß durch die im Patentanspruch 1 angegebenen Verfahrensschritte gelöst. Vorteilhafte Ausgestaltungen der Erfindung sind in den abhängigen Ansprüche gekennzeichnet.

Das erfindungsgemäße Verfahren sieht vor, dass zunächst ein Behälter ohne Bodenwand aus einem ersten Kunststoffmaterial hergestellt wird. Hierzu kommt jedes geeignete Verfahren, beispielsweise Blasverfahren oder Spritzgussverfahren in Betracht.

Anschließend wird der Behälter in einer Spritzgussform angeordnet, und es wird ein Formkern derart in den Behälter eingesetzt, dass ein Ringspalt zwischen dem Formkern und der Innenwand des Behälters verbleibt und außerdem unter oder hinter dem Ende des Formkerns ein Hohlraum frei von dem Formkern bleibt. Durch geeignete Maßnahmen wird vorzugsweise sichergestellt, dass der Formkern sich mittig in dem Behälter befindet:

Der Ringspalt kann in Umfangsrichtung und/oder in axialer Richtung eine konstante Breite haben. Die Breite des Ringspalts kann bis zu 0,5 mm, vorzugsweise nur bis zu 0,2 mm betragen.

Anschließend wird die Spritzgussform geschlossen und ein zweites Material, das keine Verbindung mit dem ersten Material des Behälters eingeht, in den Ringspalt und den unter dem Ende des Formkerns verbliebenen Hohlraum gespritzt. Hierdurch wird der flexible Innenbeutel erzeugt, der an der Innenwand des Behälters anliegt, jedoch mit diesem keine Verbindung eingeht und daher leicht von dem Behälter ablösbar ist.

Nach dem Öffnen der Spritzgussform und dem Zurückziehen des Formkerns aus dem Behälter kann dieser mit dem anliegenden Innenbeutel entnommen werden.

Dieses Verfahren ermöglicht es, Innenbeutel mit der jeweils gewünschten Wandstärke und Wandstärkenverteilung mit verhältnismäßig geringem Aufwand herzustellen, indem die Außenkontur des in den Behälter eingesetzten Formkerns entsprechend gestaltet wird.

In einer Ausführungsform der Erfindung wird der Behälter mit einer kreiszylindrischen Innenwand hergestellt. Wenn der zugehörige Formkern ebenfalls eine kreiszylindrische Form hat, wird auf diese Weise ein flexibler Innenbeutel mit in Umfangsrichtung und in axialer Richtung gleichbleibender Wandstärke erzeugt.

Der Behälter kann sich jedoch auch zu seinem oberen Ende hin erweitern, was das Zurückziehen des Formkerns dann erleichtert, wenn dieser eine kreiszylindrische Form hat. Bei dieser Ausführungsform der Erfindung nimmt die Wandstärke des Innenbeutels zur Austrittsöffnung des Behälters hin zu. Der Behälter und/oder der Formkern können auch in Umfangsrichtung eine von einem Kreiszylinder abweichende Kontur haben, beispielsweise kann auf diese Weise ein Innenbeutel hergestellt werden, der in axialer Richtung verlaufende Wandstreifen kleineren oder größeren Durchmessers hat, damit sich der Innenbeutel bei der Abgabe von Behälterinhalt auf eine gewünschte Weise zusammenziehen kann, damit eine evtl. nicht ausbringbare Restmenge des Behälterinhalts minimiert wird.

Außerdem ist vorgesehen, dass der Behälter im Bereich der Austrittsöffnung des Behälterinhalts eine vorzugsweise hinterschnittene Ringnut hat, in die beim Spritzgießen ebenfalls das Material des flexiblen Innenbeutels eintritt, wodurch vorzugsweise dieser fest mit dem Behälter verbunden wird.

Wenn der Behälterinhalt mit der Umgebungsluft in Berührung kommen darf, kann der Behälterinhalt durch eine Pumpe abgegeben werden, die den Eintritt von Luft in den Innenbeutel zulässt.

Erfindungsgemäß wird ein Behälter ohne Bodenwand verwendet, wobei die Spritzgussform so gestaltet ist, dass sie beim Spritzgussvorgang den offenen Boden des Behälters verschließt. Auf diese Weise ist eine Kartusche für eine Spritze herstellbar, bei der ein Kolben in das offene Ende des Behälters eingreift und zur Abgabe von Behälterinhalt in dem Behälter vorgeschoben wird und dabei den Innenbeutel in Richtung der Austrittsöffnung des Behälterinhalts drückt. Der Innenbeutel hat bevorzugt eine kreiszylindrische Form mit konstanter Wandstärke der Umfangswand, jedoch hat die Bodenwand des Innenbeutels bevorzugt eine größere Wandstärke, um dem Druck des Kolbens besser standhalten zu können.

Bei der Verwendung als Kartusche einer Spritze hat der flexible Innenbeutel nur eine geringe Wandstärke von maximal 0,5 mm, wobei eine Wandstärke von etwa 0,2 mm bevorzugt ist.

Wie oben erwähnt ist, werden bei dem erfindungsgemäßen Verfahren für den Behälter und den Innenbeutel zwei verschiedene Materialien verwendet, die keine Verbindung miteinander eingehen, so dass der Innenbeutel leicht ablösbar ist. Wenn - wie dies bevorzugt ist - der Behälter z. B. aus PP, COP oder COC besteht, kommen für das Material des Innenbeutels PE, Solyn, EVA oder PA in Betracht, ohne dass diese Aufzählung abschließend ist. Damit sich der Innenbeutel leicht von dem Behälter lösen lässt, sollte die Innenwand des Behälters eine glatte Kontur haben, wie dies bei einem Kreiszylinder oder einem Zylinder mit ovaler Querschnittsform der Fall ist.

Die Erfindung wird nachfolgend anhand einer Ausführungsform mit Bezug auf die beigefügten Zeichnungen näher erläutert. Dabei zeigen:
- Figur 1: einen Längsschnitt durch eine Spritze mit einer Kartusche, die nach dem erfindungsgemäßen Verfahren mit einem flexiblen Innenbeutel versehen ist;
- Figur 2: eine Aufsicht auf die Kartusche der Figur 1;
- Figur 3: Schnitt A-A der Figur 2;

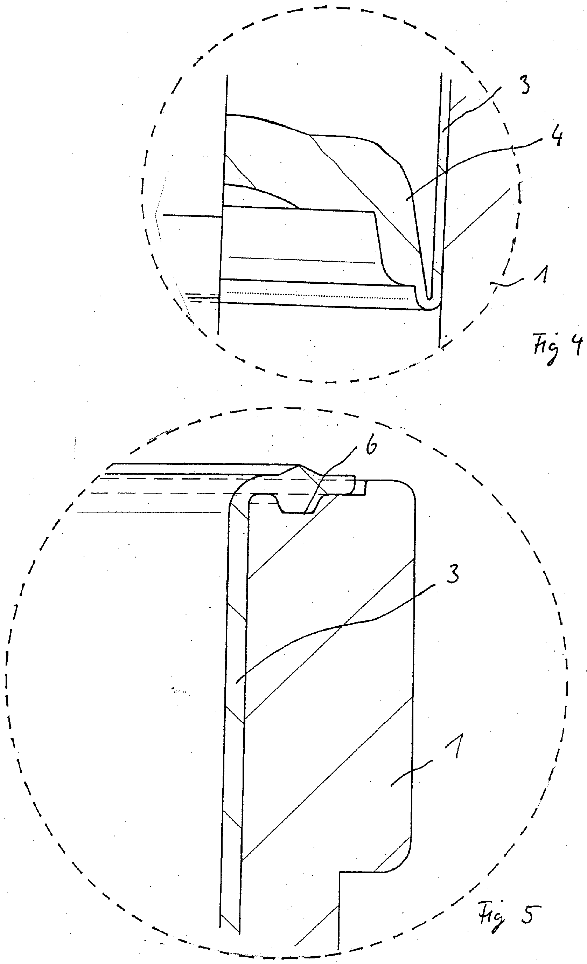

- Figur 4: die Einzelheit C der Figur 3 in vergrößerter Darstellung und
- Figur 5: die Einzelheit B der Figur 3 in vergrößerter Darstellung.

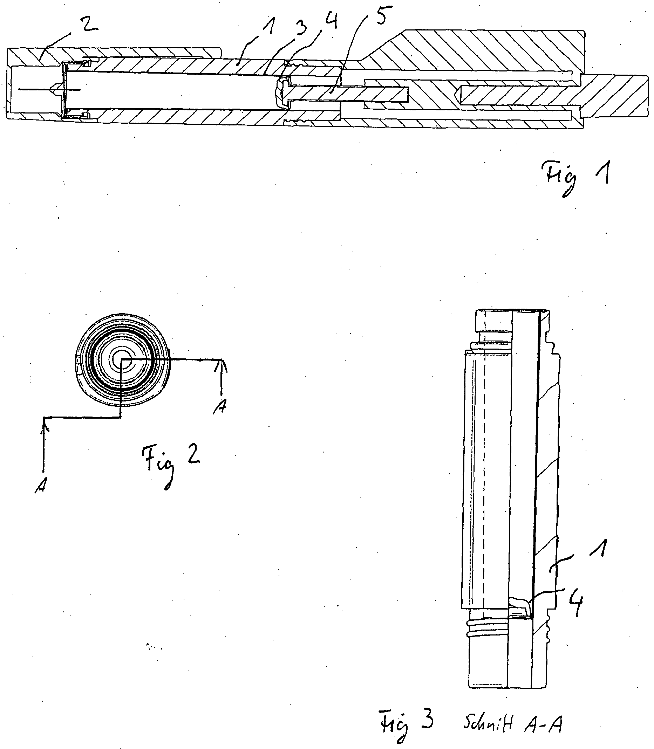

Figur 1 zeigt eine Spritze mit einer Kartusche 1, deren vorderer Endabschnitt durch eine lösbare Kappe 2 überdeckt ist. An der Innenwand der Kartusche 1 ist ein flexibler Innenbeutel 3 angespritzt, der eine Bodenwand 4 enthält, die erheblich dicker als die zylindrische Wand des Innenbeutels ist. An der Bodenwand 4 liegt ein Kolben 5 der Spritze an, der vorschiebbar ist, um den Inhalt der Kartusche auszustoßen.

Zur Ausbildung des Innenbeutels werden zwei Formkerne in die Kartusche eingesetzt, wobei zwischen die Umfangswand des oberen Formkerns (gemäß Figur 3) und die Innenwand der Kartusche sowie zwischen die Unterseite des oberen Formkerns und der Oberseite eines unteren Formkerns das Material des Innenbeutels eingespritzt wird, das keine Verbindung mit der Kartusche eingeht.

Die Spritzgussform ist so gestaltet, dass das Material des Innenbeutels auch in eine obere Ringnut 6 der Kartusche eintritt, so dass der Innenbeutel hier an der Kartusche 1 fixiert ist.

Herkömmliche Spritzkartuschen werden durch einen gummiartigen Kolben abgedichtet, der unter Vorspannung an der Innenwand der Kartusche anliegt. Dies kann zu Problemen mit der Abdichtung führen. Außerdem muss beim Vorschub die auftretende Reibungskraft überwunden werden und es tritt häufig ein Nachtropfen des Kartuscheninhalts auf. Diese Nachteile sind bei der erfindungsgemäßen Kartusche vermieden.

## Patentansprüche

1. Verfahren zur Herstellung einer Spritzenkartusche mit einem flexiblen Innenbeutel, dessen Inhalt durch den Vorschub eines Spritzenkolbens (5) ausbringbar ist,
**gekennzeichnet durch** folgende Schritte:
a) Herstellen eines im wesentlichen zylindrischen Behälters (1) ohne Bodenwand aus einem ersten Kunststoffmaterial, wobei am vorderen Rand des Behälters wenigstens eine Ringnut (6) ausgebildet wird;
b) Anordnen des Behälters (1) in einer Spritzgussform, wobei die Spritzgussform den offenen Boden des Behälters (1) verschließt;
c) Einsetzen eines Formkerns kleineren Durchmessers in den Behälter (1) derart, dass ein Ringspalt zwischen dem Formkern und der Innenwand und ein Hohlraum am Ende des Formkerns verbleibt;
d) Schließen der Spritzgussform und Einspritzen eines zweiten Materials für den Innenbeutel (3), das keine Verbindung mit dem ersten Material eingeht, in den Ringspalt, die wenigstens eine Ringnut (6) und den Hohlraum;
e) Öffnen der Spritzgussform, Zurückziehen des Formkerns aus dem Behälter und Entnehmen des Behälters (1) mit einem anliegenden Innenbeutel (3).

2. Verfahren nach Anspruch 1,
**dadurch gekennzeichnet,**
**dass** der Behälter (1) mit kreiszylindrischer Innenwand hergestellt wird.

3. Verfahren nach Anspruch 1 oder 2,
**dadurch gekennzeichnet,**
**dass** ein Formkern mit kreiszylindrischer Form verwendet wird.

4. Verfahren nach einem der Ansprüche 1 bis 3,
**dadurch gekennzeichnet,**
**dass** der Ringspalt in Umfangsrichtung eine konstante Breite hat.

5. Verfahren nach einem der Ansprüche 1 bis 4,
**dadurch gekennzeichnet,**
**dass** der Ringspalt in axialer Richtung eine konstante Breite hat.

6. Verfahren nach einem der Ansprüche 1 bis 5,
**dadurch gekennzeichnet,**
**dass** die Breite des Ringspalts bis zu 0,5 mm, vorzugsweise nur bis zu 0,2 mm beträgt.

7. Verfahren nach einem der Ansprüche 1 bis 6,
**dadurch gekennzeichnet,**
**dass** der Innenbeutel (3) eine kreiszylindrische Form mit konstanter Wandstärke der Umfangswand enthält und dass seine Bodenwand (4) dicker ist als seine Umfangswand.

## Claims

1. A method of manufacturing a syringe cartridge with a flexible inner bag, the content of which is dischargeable by the advance of a syringe piston (5), **characterised by** the following steps:
a) producing a substantially cylindrical container (1) without a base wall from a first plastic material, wherein at least one annular groove (6) is formed at the front edge of the container;
b) arranging the container (1) in an injection mould, wherein the injection mould closes the open base of the container (1);
c) inserting a mould core of a smaller diameter into the container (1) such that an annular gap between the mould core and the inner wall and a cavity at the end of the mould core remain;
d) closing the injection mould and injecting a second material for the inner bag (3), which forms no connection with the first material, into the annular gap, the at least one annular groove (6) and the cavity;
e) opening the injection mould, retracting the mould core from the container and removing the container (1) with an attached inner bag (3).

2. A method as claimed in Claim 1, **characterised in that** the container (1) is produced with a circular cylindrical inner wall.

3. A method as claimed in Claim 1 or 2, **characterised in that** a mould core with a circular cylindrical shape is used.

4. A method as claimed in one of Claims 1 to 3, **characterised in that** the annular gap has a constant breadth in the peripheral direction.

5. A method as claimed in one of Claims 1 to 4, **characterised in that** the annular gap has a constant breadth in the axial direction.

6. A method as claimed in one of Claims 1 to 5, **characterised in that** the breadth of the annular gap is up to 0.5 mm, preferably only up to 0.2 mm.

7. A method as claimed in one of Claims 1 to 6, **characterised in that** the inner bag (3) has a circular cylindrical shape with constant wall thickness of the peripheral wall and that its base wall (4) is thicker than its peripheral wall.

## Revendications

1. Procédé servant à fabriquer une cartouche de seringue comprenant une poche intérieure flexible, dont le contenu peut être distribué par l'avancée d'un piston de seringue (5),
**caractérisé par** des étapes suivantes consistant à :
a) fabriquer un contenant (1) sensiblement cylindrique sans paroi de fond à partir d'un premier matériau en plastique, dans lequel au moins une rainure annulaire (6) est réalisée au niveau du bord avant du contenant ;
b) disposer le contenant (1) dans un moule pour coulage par injection, dans lequel le moule pour coulage par injection ferme le fond ouvert du contenant (1) ;
c) insérer une partie centrale moulée de diamètre plus petit dans le contenant (1) de telle manière que restent une fente annulaire entre la partie centrale moulée et la paroi intérieure et un espace creux au niveau de l'extrémité de la partie centrale moulée ;
d) fermer le moule pour coulage par injection et injecter un deuxième matériau pour la poche intérieure (3), lequel n'établit aucune liaison avec le premier matériau, dans la fente annulaire, dans l'au moins une rainure annulaire (6) et dans l'espace creux ;
e) ouvrir le moule pour coulage par injection, retirer la partie centrale moulée du contenant et enlever le contenant (1) comprenant une poche intérieure (3) contiguë.

2. Procédé selon la revendication 1,
**caractérisé en ce**
**que** le contenant (1) est fabriqué avec une paroi intérieure cylindrique circulaire.

3. Procédé selon la revendication 1 ou 2, **caractérisé en ce**
**qu'**une partie centrale moulée présentant une forme cylindrique circulaire est utilisée.

4. Procédé selon l'une quelconque des revendications 1 à 3,
**caractérisé en ce**
**que** la fente annulaire a dans la direction périphérique une largeur constante.

5. Procédé selon l'une quelconque des revendications 1 à 4,
**caractérisé en ce**
**que** la fente annulaire a dans une direction axiale une largeur constante.

6. Procédé selon l'une quelconque des revendications 1 à 5,
**caractérisé en ce**
**que** la largeur de la fente annulaire présente une valeur allant jusqu'à 0,5 mm, de préférence allant seulement jusqu'à 0,2 mm.

7. Procédé selon l'une quelconque des revendications 1 à 6,
**caractérisé en ce**
**que** la poche intérieure (3) reçoit une forme cylindrique circulaire dont la paroi périphérique présente une épaisseur de paroi constante, et en ce que sa paroi de fond (4) est plus épaisse que sa paroi périphérique.
